# EUROPEAN PATENT SPECIFICATION

(11) **EP 0 458 873 B1**
(45) Date of publication and mention of the grant of the patent: **13.09.1995**
(21) Application number: 90903626.1
(22) Date of filing: 14.02.1990
(51) Int. Cl.: H01H 37/54, H01H 37/04, H05B 3/82

(54) **IMMERSION HEATERS**
TAUCHHEIZKÖRPER
DISPOSITIF DE CHAUFFAGE DESTINE A ETRE IMMERGE

(30) Priority: 14.02.1989 GB 8903319
(43) Date of publication of application: 04.12.1991
(60) Divisional application: 95102801.8
(73) Proprietor: ELPAG AG CHUR, CH-7001 Chur (CH)
(72) Inventor: TAYLOR, John Crawshaw, Arbory, Isle of Man (GB)
(74) Representative: Fritsche, Rainer, Dipl.-Wirtsch.-Ing.
(86) International application number: GB9000236
(87) International publication number: WO9009672

(56) References cited:
- EP-A- 0 277 551
- GB-A- 2 046 521
- GB-A- 2 111 754
- US-A- 3 135 860

## Description

This invention relates to electric immersion heaters of the kind which are used in liquid heating vessels or containers such as washing machines, urns, jugs, kettle or the like. Such heaters conventionally comprise a tubular heater element mounted on an element head by means of which the heater is mounted in an opening in the vessel or container wall, the element being disposed within the vessel or container with the ends thereof however extending through the head and thus being accessible from outside the vessel or container for the making of electrical connections to the element.

The element of such an electric immersion heater conventionally comprises an outer tubular sheath usually but not necessarily of circular cross-sectional shape of a suitable metal e.g. copper or stainless steel, a ferrous alloy resistance heating wire in the form of a helically wound coil extending axially through the sheath and being spaced therefrom by an electrical insulating material such as magnesium oxide which also serves to conduct heat from the coil to the surrounding sheath and thence to the liquid to be heated.

The heating coil does not extend to the ends of the sheath but rather stops short of the ends and is continued at each end by a so-called "cold tail" i.e. a metal rod of much greater diameter than that of the heating wire and offering by comparison with the heating wire little electrical resistance so as not to be resistively heated in use of the immersion heater to any significant extent. The cold tails are usually made of mild steel and are welded to the end turns of the resistive heating coil. Moreover the cold tails extend beyond the ends of the sheath of the heater element, the ends of the sheath around the cold tails being sealed by an electrically insulating and water impervious sealing material e.g. an epoxy resin. The exposed ends of the cold tails thus constitute-the electrical terminals of the immersion heater and electrical connections thereto can be made in any desired manner.

If an electric immersion heater is energised not immersed in liquid to be heated, the sheath will become very hot and within a minute or so the heater will fail often violently with potentially catastrophic results. In many applications it is necessary to make provision against the possibility of the heater being operated for longer than a short period not immersed in liquid on account of the hazard which this would represent in use both in itself and the risk of overheating, melting or even setting on fire any adjacent plastic parts such as the vessel. It is thus known for electric immersion heaters to incorporate thermal fuses within the element in series with the heating wire so as in an overheating situation quickly to disable the heater which would thereafter usually need to be replaced. In applications where an overheating situation is very likely to occur, as for example in electric kettles through the kettle being switched on dry or boiling dry, it is known to provide a thermal control unit including an electric switch and a thermally-responsive actuator, mounted on or to the element head of the immersion heater, a portion of the heater element, termed the "hot return" being brazed to the head. The thermally-responsive actuator of the thermal control unit is disposed on the outside of the head opposite the hot return to sense the temperature of the hot return portion of the heater element through the head and thus in an overheating situation to activate the electric switch and interrupt the supply current to the heater. The actuator is often designed automatically to reset after sufficient cooling whereupon the switch is closed and the cycle will repeat until the mains supply connection to the heater is broken or liquid is again surrounding the heater in the vessel.

Both of the above described arrangements for preventing prolonged overheating of an immersion heater have their disadvantages. On the one hand thermal fuses are relatively expensive, difficult to incorporate within an element, and their efficacy in individual heaters cannot be tested. Moreover once a thermal fuse has operated the heater must usually be replaced. On the other hand the provision of a thermal control unit and the adaptation of the heater to provide a hot return to the element head, very considerably adds to the cost of the basic immersion heater.

From US-Patent 3,135,860 an eletric immersion heater is known which comprises a heating element having a central resistive conductor with a thermally-responsive actuator mounted on it for operating a switch to interrupt an electrical supply to said element. Thereby, the thermally-responsive actuator is directly connected to the resistive conductor.

According to the present invention it is proposed to substitute a cold tail of high thermal conductivity such as copper for the conventional mild steel cold tail of a heater element and to utilise the temperature of the cold tail to operate a thermal control directly sensing the temperature of the exposed part of the cold tail extending beyond the end of the element sheath in an overheating situation. Thus the invention provides, an electric immersion heater comprising a heating element having a sheath, and which terminates in at least one cold tail having a first portion connected to a resistance heating coil of said element, and a second portion extending beyond the end of the element sheath, and a thermally-responsive actuator mounted on said second portion of said cold tail. Said cold tail is of a high thermal conductivity and said actuator which can be a thermally-responsive bimetallic actuator, senses the temperature of said second portion of said cold tail for operating a switch to interrupt an electrical supply to said element in the event that the temperature in said cold tail rises above a predetermined value when said element overheats.

Such an arrangement obviates the need for expensive and inconvenient thermal fuses. Also, the provision of a switch associated with the cold tail avoids the need to provide a hot return connection to an element head with consequent cost savings. Furthermore, the switch may be considerably simplified as compared with known thermal control units.

The actuator may be chosen so as to reset automatically after operating the switch, after its temperature drops to below a desired value, or so as to require external, e.g. manual resetting.

Also it will be appreciated that according to the present invention an actuator may readily be associated with each cold tail thus affording protection against certain element fault conditions which are not safeguarded against by all known thermal control units such as element breakdown to earth in the same pole as the usual single pole protector, possibly with polarity reversed. Also international standards are moving towards specifying dual pole protection on elements. Thus in a preferred embodiment, said element has two such high thermal conductivity cold tails and a thermally-responsive bimetallic actuator is mounted on the respective second portions of both cold tails for operating switches of respective controls. The operating characteristics of both bimetallic actuators are preferably chosen to be substantially the same.

The bimetallic actuator of the invention can take any suitable form. One such form is a snap-action bimetallic element, although others can easily be seen as applicable to the invention,

Although the actuator may act so as to move a movable contact of a switch, in a preferred embodiment, a contact may be mounted on the actuator itself. This provides for a much simpler construction of control.

The exercise of the present invention requires the temperature of the external portion of the cold tail not only to increase sufficiently in an overheating situation to operate the thermal control but to do so within a short prescribed period of time. The rate of increase in temperature and the temperature attained by the external portion of a cold tail of an immersion heater in an overheating situation will be influenced by a number of factors, most notably the heat conductivity of the cold tail and its length. Accordingly the heating element of the invention has a cold tail or tails of high conductivity such as copper, as opposed to the mild steel cold tails normally provided, so as to increase the heat flow to the actuator. The length of such a cold tail or tails must be carefully determined by experiment to achieve the desired operating characteristics. The longer the cold tail, the slower the rise in temperature and the lower the temperature attainable of the exposed end of the cold tail. If however the cold tail is too short, the quicker reaction time may result in the nuisance of the thermal control operating when not required. When there is liquid surrounding the element, the cold tail will be cooled by the liquid surrounding the element. The longer the cold tail, the less the effect will be of the heat from the element, and the more the temperature of the end of the cold tail tends to approximate to that of the liquid itself. However the longer the cold tail, the larger its thermal capacity will be, so that under dry operating conditions, the response time of the actuator is increasesd. If the cold tail is too short, however, in normal use, as the liquid is heated to its maximum temperature, then the combination of heat from the heating wire and the heat of the liquid may cause the actuator to nuisance trip. However the shorter the cold tail, the smaller its thermal capacity will be so that in dry operating conditions, the response time of the actuator and the overall temperature reached by the dry element is reduced. The heat flow through the cold tail is thus a dynamic situation, with heat being gained from the heater wire and lost sideways along the length of the cold tail, which length must therefore be determined by experiment for each application. The thermal capacity and length of the cold tail outside the vessel should preferably be kept to a minimum to reduce the response time under dry operation conditions, but without nuisance tripping.

The response of the actuator will also be determined to some extent, by the way in which it is mounted on the cold tail. In a preferred embodiment, the cold tail is formed so as to present a relatively large area of surface contact between the cold tail and the bimetal actuator. This maximises heat transfer between the cold tail and the actuator. Preferably the cold tail is pressed to form this area.

The shape of the contact area will be determined by the shape of the actuator. A common snap-action bimetallic actuator is disc-shaped and comprises a generally U shaped aperture which releases a central tongue. Such an actuator is shown in GB 1542252. A suitable contact area for such an actuator is flat or slightly curved to match the curvature of the actuator and has a first, generally circular portion for contact with the active portion of the bimetal, which is at the base of said tongue, and a second elongate portion for mounting the tongue of the bimetal.

If desired, the heat transfer to the actuator may be further improved by replacing the conventional insulating material within the element sheath where it surrounds the cold tail, which is a good conductor of heat, with an insulating material which is a poor conductor of heat in order to reduce loss of heat as it flows along the cold tail towards the thermal control. The mounting of the element in the heating vessel may also be such as to reduce heat loss from the element in this area.

The response time of the actuator may also be improved by increasing the area over which the cold tail picks up heat from the heating wire by extending the conductive tail inside the coils of the heating wire. This extension may be a reduced diameter or a tapered cone.

To facilitate construction, the cold tail is preferably formed with means for securing the actuator in position. A particularly simple form of attachment is one in which the cold tail-is formed, in the mounting area, with a pin over which an aperture in the actuator is placed, and which is then riveted over to secure the actuator in position. Means, such as interengaging dimples and recesses or apertures may be provided on the cold tail and the actuator for alignment purposes.

The connection between the copper cold tail and ferrous alloy wire of a heating coil may be accomplished in several manners. It is possible to laser weld the wire directly to the cold tail. This list is not exhaustive, and other methods may easily be envisaged.

Two embodiments of the invention will be now be described, by way of example only with reference to the accompanying schematic drawings wherein:-
Fig. 1 shows schematically a section through an electric immersion heater and associated thermal control for mounting in a washing machine tub or container;
Fig. 2 is a section along line B-B in Fig. 1;
Fig. 3 is a view along arrow C in Fig. 1, with the cover removed;
Fig. 4 is a part vertical section through an electric conversion heater and associated control of a hot water jug along the line D-D Fig 6;
Fig. 5 is a section taken along line E-E of Fig. 5; and
Fig. 6 is a horizontal part section taken through the control of Fig. 4.

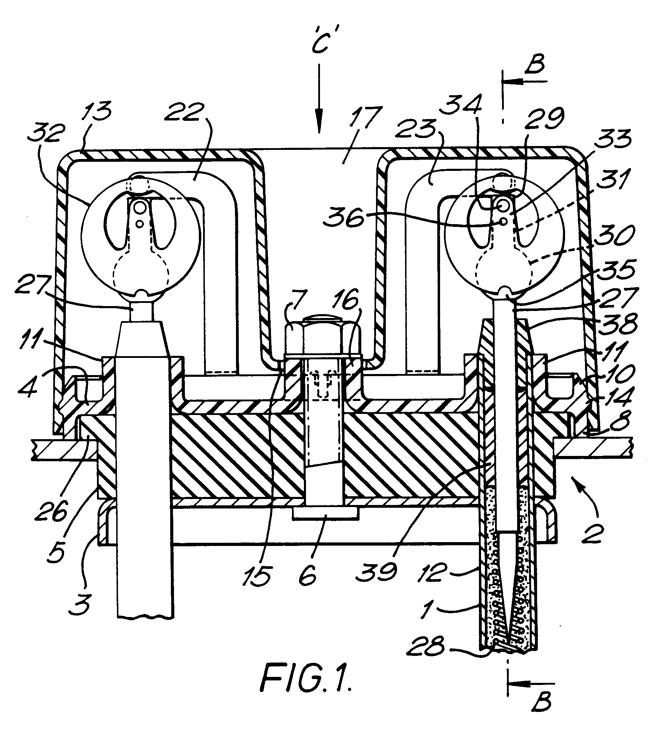

Figs. 1 to 3 illustrate an immersion heater for a washing machine wherein the element 1 is mounted on a head 2 by which the heater is mounted in an aperture in the washing machine tub or container.

The head 2 is of a generally well-known kind but modified for the purposes of this embodiment. It comprises inner and outer clamping plates 3,4 with a resiliently compressible and radially expansible seal 5 sandwiched therebetween. A headed bolt 6 and nut 7 enable the plates 3, 4 to be drawn together to compress and expand the seal 5 into contact with a surrounding aperture in the wall 9 of a container so as both to mount the heater in the aperture and to form a seal therewith.

The ends of the element 1 extend through the inner plate 3 and are embraced by the seal 5 which when compressed seals around the element ends and also serves to secure the element in the head.

As is conventional, the inner plate 3 is of metal but the outer plate 4 is in this embodiment of the invention a moulding of plastics material and includes a downwardly pointing flange 8 which locates against the container wall 9, an upwardly pointing strengthening flange 10, and raised sleeves 11 which engage with the ends of the element sheath 12. A cover moulding 13 clips over a bead 14 formed around the periphery of the outer plate 4. The cover 13 has an aperture 15 which extends around a mounting boss 16 for the nut 7, and has a well 17 to allow access to the nut 7 for removal of the head 2.

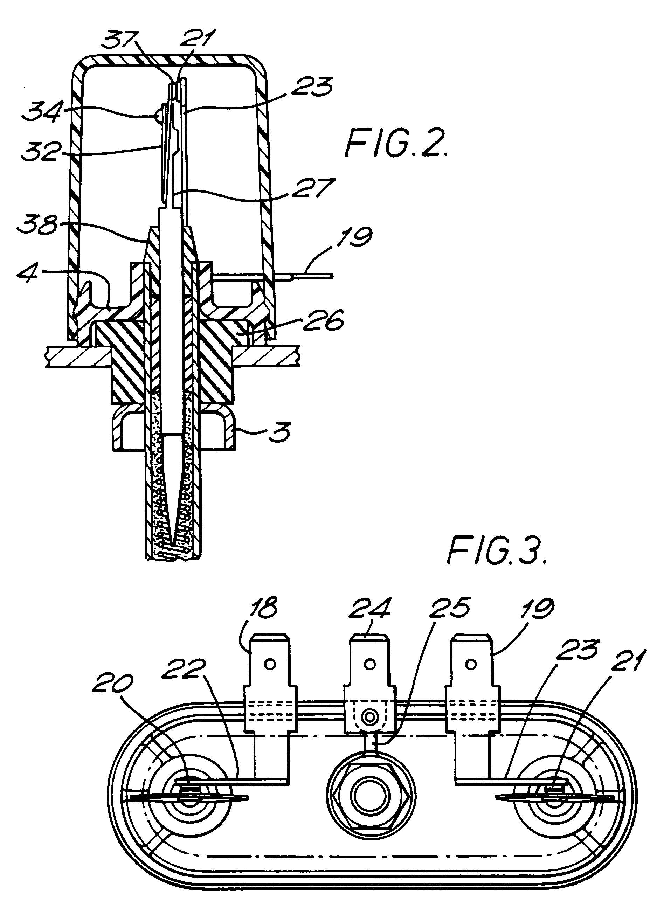

As can be seen from Fig. 3 spade terminals 18,19 which are connected to respective fixed switch contacts 20,21 by links 22,23 protrude from the cover 13. Likewise an earth terminal 24 protrudes from the cover 13 and is connected to the element sheath 12 via a link 25, the bolt 6 and the inner clamp plate 3. Links 22,23 and 25 are mounted on the outer plate 4 by suitable means.

It will be noted that the seal 5 is formed with a peripheral flange 26 which is sandwiched between the container wall 9 and the outer plate 4. The flange 8 formed on the outer plate 4 prevents over-compression of the seal 5 in this area when the nut 7 is tightened on the bolt 6.

The thickness of the seal 5 where it contacts element sheath 12 may be reduced in order to inhibit the radial loss of heat. Likewise the plastics sleeves 11 also assist in reducing the loss of heat from the ends of the element. The construction of the outer plate 4 of plastics material reduces the thermal capacity of the head and again assists in containing heat within the ends of the element. It would also be possible to space the inner plate 3 from the element sheath 12 where it passes through the plate 3 to again reduce the loss of heat from the ends of the element.

Turning to the construction of the element 1, the cold tails or pins 27 extend beyond the ends of the element sheath 12 and the sleeves 11 of the outer plate 4. An insulating plug 38 closes the end of the sheath 12, above an insulating sealing material 39 such as epoxy. The inner ends of the cold tails 27 are tapered and engage with a helically wound heating wire 28. The heating wire 28 is of a ferrous resistance alloy and may be mounted directly on the cold tail 27 as shown. The cold tails 27 are of copper and each is formed, for example in a press, at its outer end to form a tongue 29 having a generally circular portion 30 and an elongate portion 31. Each tongue 29 mounts a thermally-responsive snap-action bimetallic actuator 32, which is generally circular in shape and has a generally U-shaped aperture therein which releases a central tongue 33 which is connected, at 34, to the elongate portion 31 of the cold tail tongue 29. This holds the active area of the actuator, i.e. the central part in the region of the base of the tongue 33 against the circular portion 30 to maximise heat transfer to the actuator.

The tongue 33 of the actuator 32 is secured to the cold tail by a rivet 34. This rivet is first formed in the pressing operation as an upstanding pin on the cold tail 27. The actuator 32 is provided with a hole which fits over the pin, and once in position the pin is riveted over to secure the actuator 32 in position. The actuator 32 is orientated in the correct position on the cold tail by interengaging locating means provided on the respective components. These are shown diagrammatically at 35,36.

A movable contact 37 is mounted, on the end of each actuator 32 opposite the tip of tongue 33. As can be seen best from Figure 2 each movable contact 37 makes contact with the respective fixed contacts 20,21 under normal operating conditions. When the temperature of the cold tail 27 and, thus of the actuator, rises to a chosen value, the actuator will operate with a snap-action to move the movable contact 37 away from the fixed contact 20,21 to cut the power supply to the element 1. The actuator may be constructed to return to its original position after it cools down. The operating characteristics of both actuators are chosen to be substantially similar whereby equal protection is given to each pole of the element.

Thus the operating characteristics of the actuator 32 may be chosen in relation to the temperature achieved by the cold tail 27 in an overheating situation, as when the heater is energised when not immersed in water, quickly to open the switch contacts. Operation well within one minute has proved possible.

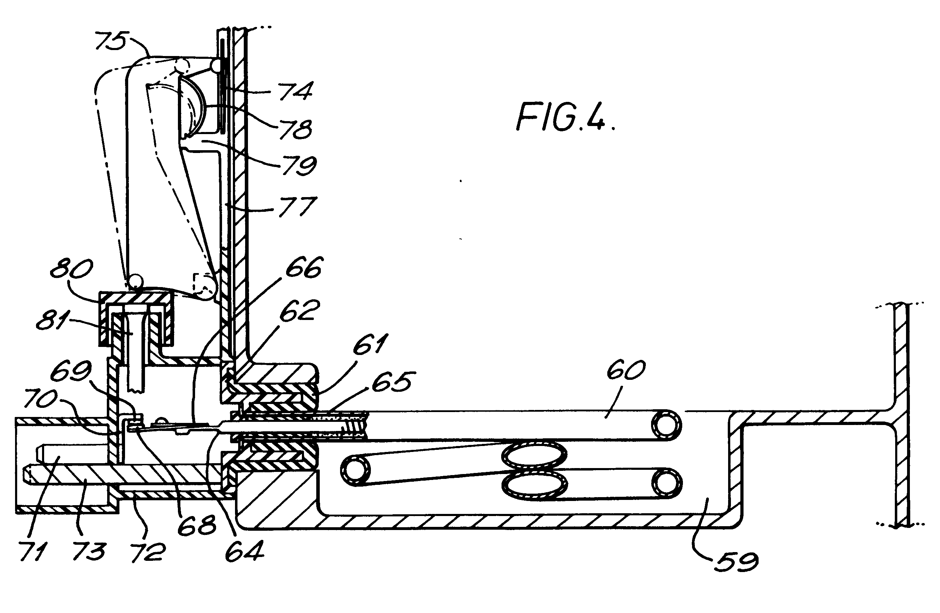

Figures 4 to 6 show a further embodiment of the invention. In this embodiment, a heating element 60 is located in a well 59 in the base of a heating vessel such as a kettle or hot water jug. The element 60 is supported in a two part head, in this case comprising a resilient seal 61 which engages and seals the element 60, the aperture in the vessel wall, and the base 62 of a control housing which extends into said aperture. The base 62 has a well receiving each end region of the element sheath, with the seal 61 extending into each well and around the outside of the wells to locate and seal the base and element in the aperture. The element is located axially in the aperture by virtue of an earth link 63.

The cold tails 64 of the element 60 project from the element sheath 65 and beyond the housing member 62. The cold tails 64 are of copper and have tapered inner ends to which are connected to a helically wound heating wire in any convenient manner. As in the earlier embodiment, the outer ends of the cold tails 64 are pressed to form a flattened region for the attachment of respective temperature responsive snap-action bimetallic actuators 66 which are also generally similar to those shown in the embodiment of Figures 1 to 3. As in that embodiment, the tongue of each bimetallic actuator 66 is riveted directly to the respective cold tail, at 67, to give a large area of contact between the active area of the actuator 66 and the cold tail 64, and a movable contact 68 is mounted on the end of the actuator 66 opposite the end of the tongue of the actuator 66.

Fixed contacts 69 are provided on extensions 70 of pressed terminal pins 71, which project from cover 72 of the control housing. Further, a pressed earth pin 73 is connected by link 63 to the sheath 65 of the element 60. This link 63 also acts to maintain the element 60 in the correct axial position. As can be seen most clearly from Figure 4, during normal operation the movable and fixed contacts 68,69 are closed, but when the temperature of a cold tail 64, and thus of one of the actuators 66 rises above a given value, the actuator operates with a snap-action to open the contacts. The operating characteristics of both actuators 66 are substantially the same so that should one fail for some reason, the other will operate at substantially the same temperature. Thus the actuators 66 provide overheat protection in the event that the element is switched on without any liquid in the vessel or the vessel boils dry.

In this embodiment the bimetal actuators 66 not only provide overheat protection, but also form part of a steam or boiling control for the vessel. Referring to Figure 4, a third temperature responsive snap-action bimetallic actuator 74 is mounted adjacent an upper part of the vessel wall, and communicates through passage means, not shown, with an upper part of the vessel. If the vessel is a water jug the actuator 74 is chosen so as to trip at a temperature of substantially 100°C, such that when the water in the vessel boils, steam which accumulates in the upper part of the vessel is conducted through the passage means to act on and trip the actuator 74. The actuator 74 is in contact with an operating lever 75 which is pivotally mounted at 76 in a housing 77. A "C" spring 78 acts between a projection 79 on the housing 77 and the operating lever 75, whereby the lever 75 operates as an over-centre spring mechanism.

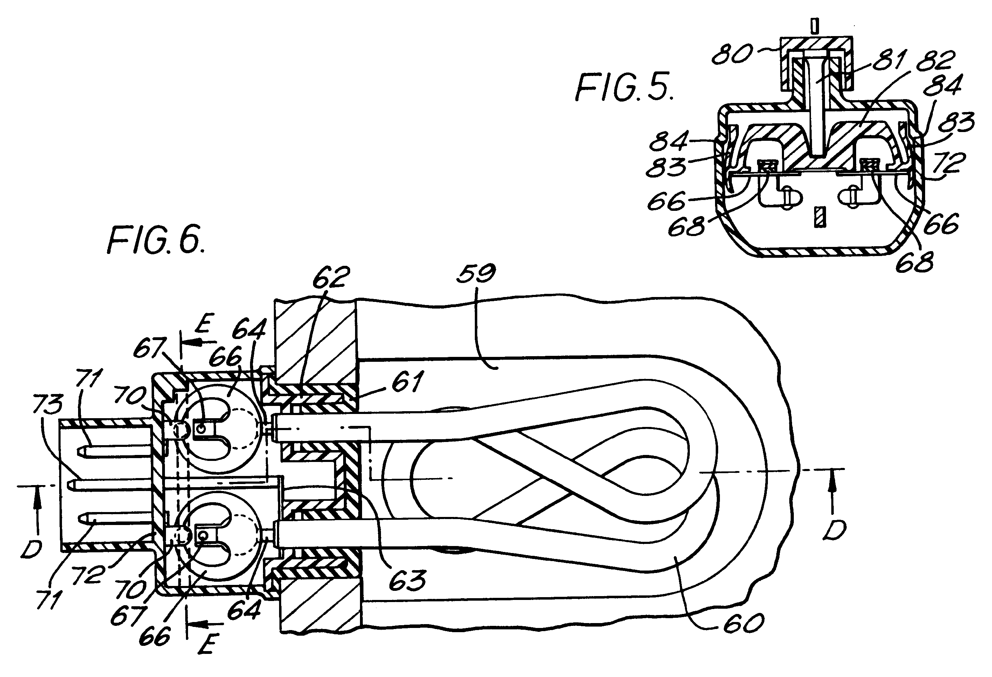

The lower end of the operating lever 75 acts on a cap 80, which is slidably mounted on the cover 72 of the control housing, to move a push-rod 81 (Fig. 5). Push rod 81 engages with the central portion of a yoke 82 which is slidably mounted in the housing cover 72, and which presses on both bimetallic actuators 66, on both sides of the contacts 68. The construction of the yoke will be discussed in detail later. When the 'steam' actuator 74 trips, it pivots the lever 75 over-centre to press the cap 80, the push rod 81 and the yoke 82 downwards from the position shown in Figure 5 against the resilience of the bimetallic actuators 66 to break both sets of contacts 68,69. When the steam bimetallic actuator 74 re-sets, the contacts 68,69 will remain open, the "C" spring keeping the operating lever 75 over-centre. The contacts 68,69 will remain open until the lever 75 is pushed back over-centre. The re-make temperature of the bimetallic actuators 66 should be over 100°C so that they will snap shut when the lever is pushed over-centre.

As was stated above, the yoke 82, is slidably mounted in the housing cover 72. To this end the yoke 82 is provided with resilient wings 83 which engage with the inner surface of the control cover 72 above a step 84 provided therein. Under normal operating conditions when the push rod 81 is moved downwardly, it causes both wings 83 of the yoke 82 to move downwardly together, by the same amount, so that the upper edges of both wings 83 remain above the step 84. However, should either set of contacts 68,69 become permanently closed, for example due to arcing, when the push rod 81 moves downwardly, the yoke 82 can pivot on the actuator held by the permanently closed contacts, with the result that the wing 83 on the other side of the yoke 82 from the contacts will move a greater distance downwards than normal. Thus not only will the other contacts be broken, to cut off the power supply to the element 60, but the upper edge of the wing 83 will move beyond the step 84, and by virtue of its resilience will snap in behind the step 84 and be retained there so that it will not be possible to re-make the broken contact even when the steam actuator 74 and operating lever 75 have reset. The control must then be removed to repair the fault. This is a very useful additional safety feature whereby welding of the contacts can be identified before damage is caused to the device.

Thus this embodiment provides a combined, boiling and overheat control for an element. The element and control components are advantageously assembled into a single unit, and the element then inserted through the aperture in the vessel wall from outside to compress the seal and position the element in the vessel. This considerably facilitates manufacture of the heating vessel. If desired means such as bolts or screws may be provided to secure the control housing to the vessel.

It will be appreciated that the device of the second embodiment described above can be easily adapted for use in other appliances, such as showers, by omitting the 'steam' bimetal control parts.

## Claims

1. An electric immersion heater comprising a heating element (1; 60) having a sheath (12; 65) and a central resistive conductor (28) with a thermally-responsive actuator (32; 66) mounted on it for operating a switch (20, 21, 37; 68; 69) to interrupt an electrical supply to said element (1; 60),
**characterized in**
that the heating element (1) terminates in at least one cold tail (27; 64) of high thermal conductivity having a first portion connected to said central resistive conductor being formed by a resistance heating coil (28), and a second portion extending beyond the end of the element sheath (12; 65), and that said thermally-responsive actuator (32; 66) is mounted on said second portion of said cold tail (27; 65).

2. An immersion heater as claimed in claim 1,
**characterized in**
that said cold tail (27; 64) is of copper.

3. An immersion heater as claimed in claim 1 or 2,
**characterized in**
that said thermally-responsive actuator is formed by a bimetallic actuator (32; 66).

4. An immersion heater as claimed in claim 3,
**characterized in**
that said thermally responsive bimetallic actuator is a snap-action bimetal (32; 66).

5. An immersion heater as claimed in claim 3 or 4,
**characterized in**
that said bimetallic actuator (32; 66) carries a contact (37; 68) of said switch (20, 21, 37; 68, 69).

6. An immersion heater as claimed in any of the preceding claims,
**characterized in**
that said second portion of said cold tail (27; 64) is formed so as to present a relatively large surface area of contact between the cold tail (27; 64) and the actuator (32; 66).

7. An immersion heater as claimed in claim 6,
**characterized in**
that said second portion is formed with a generally flat contact surface (29) for said actuator (32; 66), having a first, generally circular portion (30) and a second, elongate portion (31).

8. An immersion heater as claimed in any of the preceding claims,
**characterized in**
that means (38, 39) are provided for inhibiting heat loss from the sheath (12; 65) of the heating element (1; 60) in the region of the cold tail (27; 64).

9. An immersion heater as claimed in any of the preceding claims,
**characterized in**
that said second portion of said cold tail (27; 64) has means for mounting said actuator (32; 66) thereon.

10. An immersion heater as claimed in claim 3 or 4 and 9,
**characterized in**
that said second portion of said cold tail (27; 64) is formed with a pin (34) over which an aperture in said actuator (32; 66) engages and which is then riveted over to mount said bimetal in position.

11. An immersion heater as claimed in any of the preceding claims,
**characterized in**
that it includes a head (2) which comprises inner and outer clamping plates (3; 4) between which is sandwiched a seal element (5), and means (6, 7) for drawing said plates (3, 4) together to radially expand said seal (5) to locate and seal said element (5) in an aperture in a vessel wall (9).

12. An immersion heater as claimed in claim 11,
**characterized in**
that said outer clamping plate (4) is of plastic material and includes sleeves (11) enclosing outer end portions of said element sheath (12) extending through said seal (5).

13. An immersion heater as claimed in any of claims 1 to 10,
**characterized in**
that it includes a head comprising a base member (62) and a seal (61), said base member (62) having a well receiving an end region of said element sheath (65) and said seal (61) extending into said well and around the outside of said well to locate and seal said base member (62) and said element (60) in an aperture in a vessel wall.

14. An immersion heater as claimed in any of the preceding claims,
**characterized in**
that said element (1; 60) has two such cold tails (27; 64) and a thermally-responsive actuator (32; 66) is mounted on the respective second portions of each cold tail (27; 64) for operating a respective switch (20, 21, 37; 68; 69).

15. An immersion heater as claimed in claim 14,
**characterized in**
that said actuators (27; 64) have substantially the same operating characteristics.

16. An immersion heater as claimed in claim 14 or 15,
**characterized in**
that said actuators (64) lie in the same plane and are acted upon by a displaceable yoke member (82) of a boiling control (74) to operate said respective switches (68, 69) in order to break the electrical supply to the element (60) when liquid in a vessel boils.

17. An immersion heater as claimed in claim 16,
**characterized in**
that said boiling control comprises a bimetallic actuator (74) which is actuated by liquid boiling in the vessel, a pivotally mounted over-centre spring mechanism (78) actuated by said actuator (74), said spring mechanism (78) acting via a push rod (81) upon said yoke member (82).

18. An immersion heater as claimed in claim 17,
**characterized in**
that said yoke member (82) can pivot so as to be capable of operating one actuator (64) even if the other is rendered immovable.

19. An immersion heater as claimed in claim 18,
**characterized in**
that said yoke member (82) is formed with resilient wings (83), the arrangement being such that should one of the bimetallic actuators (64) mounted on the cold tails (64) of the element (60) not move when said yoke member (82) is moved by said push rod (81), the yoke member (82) pivots about said bimetallic actuator (66), and the one of said resilient wings (83) remote from said immovable actuator (66) snaps into place behind a step, and is retained there even after the over-centre spring mechanism (78) has been re-set.

20. An immersion heater as claimed in any of the preceding claims,
**characterized in**
that the length of the cold tail (27; 64) is determined in dependence of the desired time of reaction of said actuator (32; 66)

## Patentansprüche

1. Elektrischer Tauchheizkörper mit einem Heizelement (1; 60), welches eine Hülle (12; 65) und einen mittigen Widerstandsleiter (28) aufweist, an welchem ein temperaturgesteuertes Betätigungselement (32; 66) zur Betätigung eines Schalters (20, 21, 37; 68; 69) montiert ist, um eine Stromzufuhr zum Heizelement (1; 60) zu unterbrechen,
**dadurch gekennzeichnet**, daß das Heizelement (1) in mindestens einem unbeheizten Ende (27; 64) mit hoher Wärmeleitfähigkeit endet, welches einen ersten Abschnitt, der mit dem mittigen, von einer Widerstandsheizspirale (28) gebildeten Widerstandsleiter verbunden ist, und einen zweiten Abschnitt aufweist, der über das Ende der Heizelementhülle (12; 65) hinausragt, und daß das temperaturgesteuerte Betätigungselement (32; 66) am zweiten Abschnitt des unbeheizten Endes (27; 65) montiert ist.

2. Tauchheizkörper nach Anspruch 1,
dadurch gekennzeichnet, daß das unbeheizte Ende (27; 64) aus Kupfer besteht.

3. Tauchheizkörper nach Anspruch 1 oder 2,
dadurch gekennzeichnet, daß das temperaturgesteuerte Betätigungselement von einem Bimetall-Betätigungselement (32; 66) gebildet wird.

4. Tauchheizkörper nach Anspruch 3,
dadurch gekennzeichnet, daß das temperaturgesteuerte Betätigungselement ein einrastendes Bimetall (32; 66) ist.

5. Tauchheizkörper nach Anspruch 3 oder 4,
dadurch gekennzeichnet, daß das Bimetall-Betätigungselement (32; 66) einen Kontakt (37; 68) des Schalters (20, 21, 37; 68, 69) trägt.

6. Tauchheizkörper nach einem der vorhergehenden Ansprüche,
dadurch gekennzeichnet, daß der zweite Abschnitt des unbeheizten Endes (27; 64) so ausgebildet ist, daß er eine relativ große Kontaktfläche zwischen dem unbeheizten Ende (27; 64) und dem Betätigungselement (32; 66) bietet.

7. Tauchheizkörper nach Anspruch 6,
dadurch gekennzeichnet, daß der zweite Abschnitt mit einer im wesentlichen flachen Kontaktfläche (29) für das Betätigungselement (32; 66) ausgebildet ist, die einen ersten, im wesentlichen kreisförmigen Abschnitt (30) und einen zweiten, länglichen Abschnitt (31) aufweist.

8. Tauchheizkörper nach einem der vorhergehenden Ansprüche,
dadurch gekennzeichnet, daß Mittel (38, 39) vorgesehen sind, die einem Wärmeverlust durch die Hülle (12; 65) des Heizelements (1; 60) im Bereich des unbeheizten Endes (27; 64) entgegenwirken.

9. Tauchheizkörper nach einem der vorhergehenden Ansprüche,
dadurch gekennzeichnet, daß der zweite Abschnitt des unbeheizten Endes (27; 64) Mittel aufweist, mit denen das Betätigungselement (32; 66) daran befestigt werden kann.

10. Tauchheizkörper nach Anspruch 3 oder 4 und 9,
dadurch gekennzeichnet, daß der zweite Abschnitt des unbeheizten Endes (27; 64) mit einem Stift (34) ausgebildet ist, der in eine Öffnung des Betätigungselementes (32; 66) eingreift und der zur Befestigung des Bimetalls vernietet wird.

11. Tauchheizkörper nach einem der vorhergehenden Ansprüche,
dadurch gekennzeichnet, daß er einen Kopf (2) mit einer inneren und einer äußeren Klemmplatte (3; 4), zwischen denen ein Dichtungselement (5) sandwichartig liegt, und Mittel (6, 7) zum Zusammenpressen der Platten (3, 4) aufweist, so daß das Dichtungselement (5) sich radial ausdehnt und abdichtend in eine Öffnung einer Gefäßwand (9) gedrückt wird.

12. Tauchheizkörper nach Anspruch 11,
dadurch gekennzeichnet, daß die äußere Klemmplatte (4) aus Kunststoff besteht und Manschetten (11) aufweist, die die äußeren Endabschnitte der Heizelementhülle (12) umschließen, die sich durch die Dichtung (5) hindurch erstreckt.

13. Tauchheizkörper nach einem der Ansprüche 1 bis 10,
dadurch gekennzeichnet, daß er einen Kopf mit einer Basis (62) und eine Dichtung (61) aufweist, wobei die Basis (62) einen Hohlraum enthält, der einen Endabschnitt der Heizelementhülle (65) und der Dichtung (61) aufnimmt, die sich in den Hohlraum hinein und um die Außenseite des Hohlraums herum erstreckt, um die Basis (62) und das Element (60) abdichtend in einer Öffnung einer Gefäßwand zu plazieren.

14. Tauchheizkörper nach einem der vorhergehenden Ansprüche,
dadurch gekennzeichnet, daß das Heizelement (1; 60) zwei unbeheizte Enden (27; 64) aufweist und daß am zweiten Abschnitt eines jeden unbeheizten Endes (27; 64) ein temperaturgesteuertes Betätigungselement (32; 66) zur Betätigung eines entsprechenden Schalters (20, 21, 37; 68; 69) montiert ist.

15. Tauchheizkörper nach Anspruch 14,
dadurch gekennzeichnet, daß die Betätigungselemente (27; 64) im wesentlichen dieselben Funktionscharakteristika haben.

16. Tauchheizkörper nach Anspruch 14 oder 15,
dadurch gekennzeichnet, daß die Betätigungselemente (64) in derselben Ebene liegen und ein verschiebliches Jochelement (82) eines Kochwächters (74) auf sie einwirkt, um die jeweiligen Schalter (68, 69) so zu betätigen, daß die Stromzufuhr zum Heizelement (60) unterbrochen wird, wenn die Flüssigkeit in dem Gefäß kocht.

17. Tauchheizkörper nach Anspruch 16,
dadurch gekennzeichnet, daß der Kochwächter ein Bimetall-Betätigungselement (74), das durch die im Gefäß kochende Flüssigkeit betätigt wird, sowie einen von dem Betätigungselement (74) betätigten, gelenkig montierten Federmechanismus (78) aufweist, wobei der Federmechanismus (78) über einen Stößel (81) auf das Jochelement (82) einwirkt.

18. Tauchheizkörper nach Anspruch 17,
dadurch gekennzeichnet, daß das Jochelement (82) schwenkbar ist, so daß es ein Betätigungselement (64) betätigen kann, auch wenn das andere unbeweglich geworden ist.

19. Tauchheizkörper nach Anspruch 18,
dadurch gekennzeichnet, daß das Jochelement (82) mit federnden Flügeln (83) ausgebildet ist, wobei es so eingerichtet ist, daß für den Fall, daß eines der an den unbeheizten Enden (64) des Heizelements (60) befestigten Bimetall-Betätigungselemente (64) sich nicht bewegen sollte, wenn das Jochelement (82) von dem Stößel (81) bewegt wird, das Jochelement (82) um das Bimetall-Betätigungselement (66) ausschwenkt und derjenige federnde Flügel (83), der vom unbeweglichen Bimetall-Betätigungselement (66) entfernt ist, hinter einem Vorsprung einschnappt und dort gehalten wird, auch nachdem der schwenkbare Federmechanismus (78) zurückgesetzt worden ist.

20. Tauchheizkörper nach einem der vorhergehenden Ansprüche,
dadurch gekennzeichnet, daß die Länge des unbeheizten Endes (27; 64) in Abhängigkeit von der gewünschten Ansprechzeit des Betätigungselements (32; 66) bestimmt wird.

## Revendications

1. Thermoplongeur comprenant un élément de chauffage (1; 60) comportant une gaine (12; 65) et un conducteur central résistif (28) avec un élément d'actionnement thermosensible (32; 66) qui y est monté pour actionner un interrupteur (20, 21, 37; 68; 69) afin d'interrompre l'alimentation électrique dudit élément (1; 60), caractérisé en ce que:
l'élément de chauffage (1) se termine en au moins une tige froide (27; 64) de forte conductibilité thermique, comportant une première partie reliée audit conducteur central résistif formé par un enroulement de chauffage (28) à résistance, et une seconde partie s'étendant au-delà de l'extrémité de la gaine (12; 65) de l'élément, et en ce que ledit dispositif d'actionnement thermosensible (32; 66) est monté sur ladite seconde partie de ladite tige (27; 65).

2. Thermoplongeur selon la revendication 1, caractérisé en ce que ladite tige froide (27; 64) est en cuivre.

3. Thermoplongeur selon la revendication 1 ou 2, caractérisé en ce que ledit dispositif d'actionnement thermosensible est formé par un dispositif d'actionnement à bilame (32; 66).

4. Thermoplongeur selon la revendication 3, caractérisé en ce que ledit dispositif d'actionnement thermosensible est un bilame (32;66) à enclenchement.

5. Thermoplongeur selon la revendication 3 ou 4, caractérisé en ce que ledit dispositif d'actionnement à bilame (32; 66) supporte un contact (37; 68) dudit interrupteur (20, 21, 37; 68, 69).

6. Thermoplongeur selon l'une quelconque des revendications précédentes, caractérisé en ce que ladite seconde partie de ladite tige froide (27; 64) est formée de manière à présenter une superficie de contact relativement grande entre la tige froide (27; 64) et l'élément d'actionnement (32; 66).

7. Thermoplongeur selon la revendication 6, caractérisé en ce que ladite seconde partie comporte une surface de contact (29), plate d'une façon générale, destinée audit dispositif d'actionnement (32; 66) et comportant une première partie (30) circulaire d'une façon générale, et une seconde partie allongée (31).

8. Thermoplongeur selon l'une quelconque des revendications précédentes, caractérisé en ce que des moyens (38, 39) sont présents pour neutraliser la perte de chaleur à partir de la gaine (12; 65) de l'élément chauffant (1; 60) dans la région de la tige froide (27; 64).

9. Thermoplongeur selon l'une quelconque des revendications précédentes, caractérisé en ce que ladite seconde partie de ladite tige froide (27; 64) comporte un moyen pour qu'y soit monté ledit dispositif d'actionnement (32; 66).

10. Thermoplongeur selon la revendication 3 ou 4 et 9, caractérisé en ce que ladite seconde partie de ladite tige froide (27; 64) comporte une broche engagée dans une ouverture dudit dispositif d'actionnement (32; 66) et rivetée ensuite pour maintenir ledit bilame en position.

11. Thermoplongeur selon l'une quelconque des revendications précédentes, caractérisé en ce qu'il comprend une tête (2) qui comprend des plaques de serrage intérieure et extérieure (3; 4) entre lesquelles est pris en sandwich un élément d'étanchéité (5), et des moyens (6, 7) pour attirer lesdites plaques (3, 4) l'une vers l'autre de manière à expanser radialement ledit élément d'étanchéité (5) pour placer et rendre étanche ledit élément (5) dans une ouverture d'une paroi (9) de récipient.

12. Thermoplongeur selon la revendication 11, caractérisé en ce que ladite plaque de serrage extérieure (4) est en matière plastique et comprend des saillies (11) en forme de manchon entourant les parties d'extrémité extérieures de ladite gaine (12) d'élément s'étendant à travers ledit élément d'étanchéité (5);

13. Thermoplongeur selon les revendications 1 à 10, caractérisé en ce qu'il comprend une tête comprenant un élément de base (62) et un joint d'étanchéité (61), ledit élément de base (62) comportant une cavité recevant une région d'extrémité de ladite gaine (65) d'élément et ledit joint d'étanchéité (61) s'étendant jusque dans ladite cavité et autour de l'extérieur de ladite cavité pour positionner et rendre étanche ledit élément de base (62) et ledit élément (60) dans une ouverture d'une paroi de récipient.

14. Thermoplongeur selon l'une quelconque des revendications précédentes, caractérisé en ce que ledit élément (1; 60) comporte deux tiges froides (27; 64) et un dispositif d'actionnement thermosensible (32; 66) est monté sur les secondes parties respectives de chaque tige froide (27; 64) pour actionner un interrupteur respectif (20, 21; 68, 69).

15. Thermoplongeur selon la revendication 14, caractérisé en ce que lesdits dispositifs d'actionnement (27; 64) ont sensiblement les même caractéristiques de fonctionnement.

16. Thermoplongeur selon la revendication 14 ou 15, caractérisé en ce que lesdits dispositifs d'actionnement (64) se trouvent dans le même plan et sont soumis à l'action d'un élément mobile formant étrier (82) d'un dispositif (74) de réglage d'ébullition pour actionner lesdits interrupteurs respectifs (68, 69) afin d'interrompre l'alimentation électrique de l'élément (60) quand le liquide bout dans le récipient.

17. Thermoplongeur selon la revendication 16, caractérisé en ce que ledit dispositif de réglage d'ébullition comprend un dispositif d'actionnement à bilame (74) qui est actionné par le liquide en ébullition dans le récipient, un mécanisme (78) à ressort à détente brusque, monté de façon pivotante et actionné par ledit dispositif d'actionnement (74), ledit mécanisme (78) à ressort agissant par l'intermédiaire d'une tige de poussée (81) sur ledit élément formant étrier (82).

18. Thermoplongeur selon la revendication 17, caractérisé en ce que ledit élément formant étrier (82) peut pivoter de manière à être capable de faire fonctionner l'un (64) des dispositifs d'actionnement même si l'autre de ces derniers est rendu immobile.

19. Thermoplongeur selon la revendication 18, caractérisé en ce que l'élément formant étrier (82) comporte des ailes élastiques (83), l'agencement étant tel que si l'un des dispositifs d'actionnement à bilame (64) monté sur les tiges froides (64) de l'élément (60) ne se déplaçait pas quand ledit élément formant étrier (82) est déplacé par ladite tige de poussée (81), l'élément formant étrier (82) pivoterait autour dudit bilame (66), et celle (83) desdites ailes élastiques qui se trouve à l'opposé dudit dispositif d'actionnement à bilame immobilisé (66) s'enclenche derrière un cran, et est retenu à cet endroit même après que le mécanisme (78) a ressort à détente brusque ait été réenclenché.

20. Thermoplongeur selon l'une quelconque des revendications précédentes, caractérisé en ce que la longueur de la tige froide (27; 64) est déterminée en fonction du temps désiré de réaction dudit dispositif d'actionnement (32; 66).
